# EUROPEAN PATENT SPECIFICATION

(11) **EP 4 014 720 B1**
(45) Date of publication and mention of the grant of the patent: **04.12.2024**
(21) Application number: 21214917.3
(22) Date of filing: 15.12.2021
(51) Int. Cl.: A01G 23/06, A01G 3/00, A01D 34/43

(54) **IMPROVED FORESTRY SHREDDER AND RADIO-CONTROLLED VEHICLE**
VERBESSERTER FORSTWIRTSCHAFTLICHER HÄCKSLER UND FUNKGESTEUERTES FAHRZEUG
DÉCHIQUETEUSE FORESTIÈRE AMÉLIORÉE ET VÉHICULE RADIOCOMMANDÉ

(30) Priority: 15.12.2020 IT 202000030902; 15.12.2020 IT 202000030878; 15.12.2020 IT 202000030887; 15.12.2020 IT 202000030896
(43) Date of publication of application: 22.06.2022
(73) Proprietor: MDB SRL, 66034 Lanciano (CH) (IT)
(72) Inventor: DI BIASE, Mario, 66034 LANCIANO (CH) (IT)
(74) Representative: Studio Torta S.p.A.

(56) References cited:
- EP-A1- 3 640 126
- EP-A2- 1 862 062
- DE-A1- 102015 014 225
- FR-A1- 3 040 856
- US-A- 5 003 759
- US-A1- 2008 245 043
- US-A1- 2019 082 589

## Description

### TECHNICAL FIELD

The present invention relates to an improved forestry shredder and a radio-controlled vehicle.

In particular, the present invention relates to a forestry shredder and a radio-controlled vehicle for the maintenance of green areas such as, for example, the mowing of: lands, roadsides, ditches or the like.

Advantageously, the present invention relates to a forestry shredder and a radio-controlled vehicle capable of working in extreme working conditions, i.e. even on slopes with gradients greater than 60°.

### PRIOR ART

It is known that a forestry shredder is an apparatus which is moved by a vehicle such as, for example, a tractor, and which comprises a rotor from which blades capable of shredding grass, shrubs, stumps and logs (up to 50 cm in diameter) protrude.

Advantageously, according to the present invention, the forestry shredder is configured to be moved by a radio-controlled vehicle.

Radio-controlled vehicles of the GREENCLIMBER type manufactured by MDB SRL are known. Such types of radio-controlled vehicles advantageously allow working safely on very steep slopes and with gradients of even 60°. The advantage of using radio-controlled vehicles is that the operator can operate said vehicle remotely and safely.

Other types of radio-controlled vehicles are also known, which install in use forestry shredders; however, the other types of known radio-controlled vehicles are not able to work on extreme gradients (greater than 50°), therefore the shredders installed on the other known radio-controlled vehicles (different from the vehicles of the GREENCLIMBER type) are subjected to stresses that are reduced and different with respect to the object of the present invention.

The known forestry shredders are connected to a radio-controlled vehicle by means of an axle shaft. However, such type of connection has the drawback that the axle shaft can be susceptible to breakage, due to the high stresses that can develop thereon during use.

In addition to what has been described above, the known forestry shredders comprise a rotor from which blades protrude and a door, which covers the front of the area in which the rotor operates. The door can be selectively arranged in an opening position or in a closing position, depending on the conditions of use. In the known forestry shredders, the opening system of the door is created by means of a hydraulic cylinder, which is substantially arranged outside said shredder and in a central position. Such opening system is therefore exposed to the external environment and can be susceptible to breakage.

In addition, the known shredders have the rotor that is connected by permanent (i.e. non-releasable) joints such as, for example, the weld, to the shaft that drives it into rotation. In other words, in order to ensure the correct transmission of the motion, the joining end of the rotor is connected to the shaft in a permanent manner. However, this type of joint has the drawback that, in the event of breakage of the shaft, it is necessary to replace both the rotor and the shaft with a consequent high cost. In order to obviate this, it has been attempted to replace the shaft eliminating the previous weld, for example by means of a cut, and attaching the new shaft making another weld. However, it has been observed that, during the elimination of the previous weld, the connecting end of the rotor as well as the new weld further weakened the rotor since it induced internal thermal tensions that reduced the resistance of the joint and of said rotor. It is further evident that a routine and also an extraordinary maintenance of this type of rotor is very complicated and costly.

From documents FR3040856, US2008245043, DE102015014225, US2019082589 and EP1862062 forestry shredders are known which have a releasable connection between the rotor and the machine body to which it is connected. However, these documents do not disclose a releasable connection between the rotor and the respective shaft.

Document US5003759 discloses a forestry shredder, in which the rotor is connected to the respective shaft via side plates. The rotor is made up of a cylinder provided with a plurality of tool holder pins, which are arranged parallel to the rotation axis of the drum. In document US5003759 it is shown that the bearing is mounted between the shaft and the lateral panel of the main body of the forestry shredder.

In document EP3640126 there is disclosed a radio-controlled vehicle comprising a forestry shredder.

Moreover, the known shredders comprise a belt tensioning assembly (also called a belt tensioner) created by means of a tie rod fixed on a retainer by means of two opposite nuts. This tensioning assembly is not easily accessible for an operator, who must necessarily access inside the shredder in order to check that there is no possible slackening of said belt. Moreover, the known tensioning assembly does not allow a simple adjustment of the tension of the drive belt.

### DESCRIPTION OF THE INVENTION

The object of the present invention is to provide a forestry shredder capable of overcoming the above-described drawbacks.

The object of the present invention is to provide a forestry shredder that can be installed on board a radio-controlled vehicle that generally works on very steep lands and in the presence of many irregularities. In other words, the object of the present invention is to provide a forestry shredder that is configured to ensure the resistance and the correct functioning especially in extreme working conditions, in particular at high gradients (even greater than 60°).

According to the present invention, a forestry shredder is provided as claimed in the appended claims.

### BRIEF DESCRIPTION OF THE DRAWINGS

The invention will now be described with reference to the accompanying drawings, which illustrate non-limiting example embodiments thereof, wherein:
- Figure 1 is a perspective view of a radio-controlled vehicle and of a forestry shredder according to the present invention;
- Figure 2 is a partially exploded view of a radio-controlled vehicle and of a forestry shredder according to the present invention;
- Figure 3 illustrates a detail of the forestry shredder with some parts removed for the sake of clarity;
- Figures 4 and 5 are similar to Figure 3 and illustrate the detail of Figure 3 in respective different operating configurations;
- Figure 6 is a partially exploded view of a further detail of the forestry shredder;
- Figures 7 and 8 illustrate the further detail of the forestry shredder in respective different operating configurations;
- Figure 9 illustrates a further detail, with some parts removed for the sake of clarity, of a forestry shredder;
- Figures 10 and 11 illustrate a detail of Figure 9 in respective different operating configurations;
- Figure 12 illustrates a further detail, with some parts removed for the sake of clarity, of a forestry shredder according to the present invention; and
- Figure 13 is a longitudinal section of the detail of Figure 12.

### PREFERRED EMBODIMENTS OF THE INVENTION

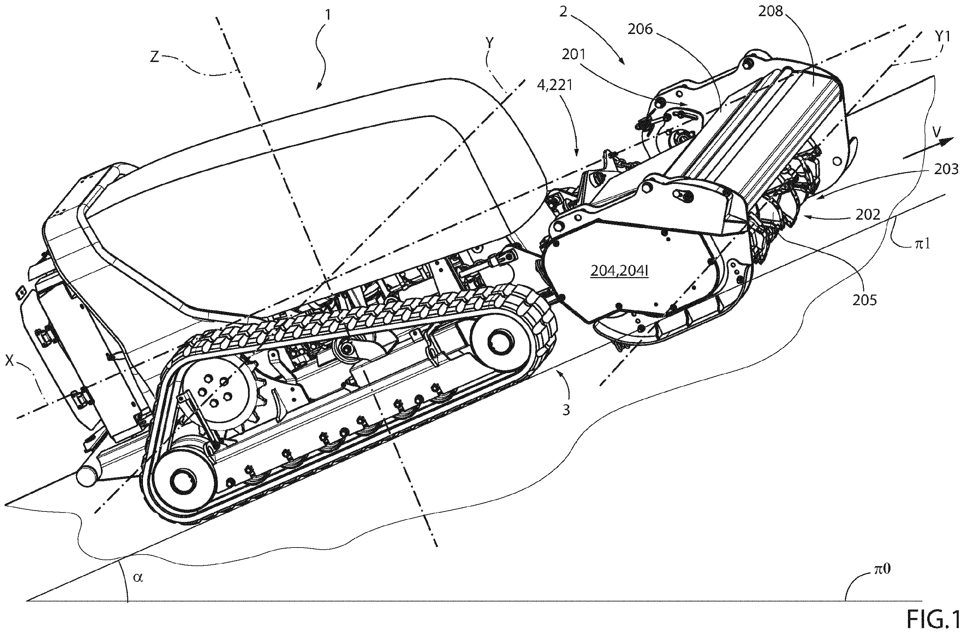

Figure 1 illustrates during use a radio-controlled vehicle 1 and a forestry shredder 2 according to the present invention.

It is noted that the forestry shredder 2 according to the present invention can be installed on board any vehicle equipped with a system compatible to be fixed to the forestry shredder 2. Advantageously, the forestry shredder 2 according to the present invention is configured to be installed on board a radio-controlled vehicle 1 capable of working on extreme gradients.

The radio-controlled vehicle 1 comprises rolling bodies 3 and is configured to be able to move on a supporting plane π1, which can have a gradient α (i.e. is inclined by an angle α) even greater than 60°, with respect to a horizontal plane n0. Preferably, the radio-controlled vehicle 1 is a highly performing vehicle and of the type manufactured by the company MDB S.R.L. under the trade name "GREEN CLIMBER".

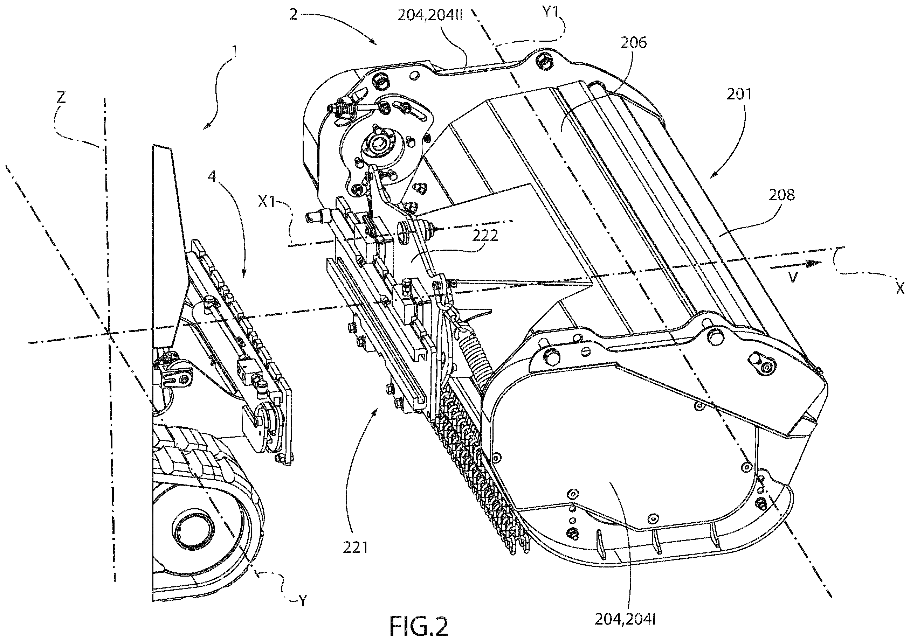

According to what illustrated in Figure 2, the radio-controlled vehicle 1 respectively has:
- a longitudinal axis X, also known as roll axis and substantially parallel to the supporting plane π1 of the radio-controlled vehicle 1 or of the forestry shredder 2;
- a vertical axis Z perpendicular to the supporting plane π1 and also known as yaw axis; and
- a transverse axis Y, perpendicular to both the longitudinal axis X and the vertical axis Z and also known as pitch axis.

It is noted that the axes identified for the radio-controlled vehicle 1 can also be identified for the forestry shredder 2, which therefore also has axes X, Y and Z as defined above.

Hereafter and in Figures 1-13, the suffixes I and II are used for indicating the right side and the left side, respectively. The terms such as front, rear, top, bottom or the like are used with reference to the normal operation in the forward direction v of the radio-controlled vehicle 1.

The radio-controlled vehicle 1 comprises a front coupling 4 to which the forestry shredder 2 is connected, as will be better illustrated in the following. In particular, the front coupling 4 is a plate, generally known as tool-holder plate, which protrudes from the front of the radio-controlled vehicle 1 and is substantially perpendicular to the longitudinal axis X.

The forestry shredder 2 comprises:
- a main machine body 201 with a box-shaped structure, which delimits a shredding chamber 202 that is open at least at the bottom, preferably at the bottom and at the front;
- a rotor 203, which is rotatable with respect to the main machine body 201 around a transverse axis Y1 which is substantially parallel to the transverse axis Y and which is arranged crosswise, in particular perpendicular, to the support sides 204; the rotor 203 is housed inside the main machine body 201, in particular in the shredding chamber 202;
- and work tools 205, which protrude in a cantilevered fashion from the outer surface of the rotor 203 and are configured to mow meadows or shrubs during the rotation of the rotor 203. The work tools 205 can be chosen from an assembly of work tools 205 that differ from one another, for example they can have shapes or sizes that differ from one another and be arranged according to a plurality of different distributions. For example, the work tools 205 can be commonly known tools such as hammers or blades.

With no loss of generality and purely by way of example, the figures schematically illustrate a rotor 203 with work tools 205, generally known as blades, which cut the plant material during the rotation of the rotor 203.

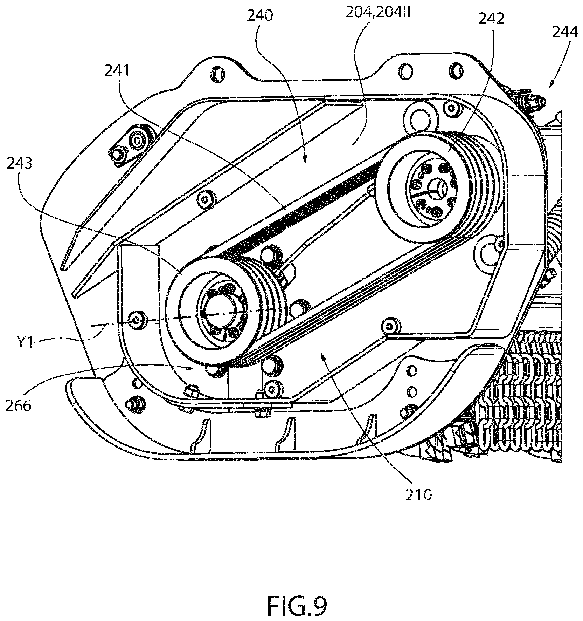

The forestry shredder 2 comprises a drive assembly 240 (schematically illustrated in Figure 9 and with some details removed for the sake of clarity), which will be described in detail in the following and which, in use, makes the rotor 203 rotate around the transverse axis Y1.

Advantageously, the main machine body 201 is configured to ensure both rigidity and resistance. The main machine body 201 further comprises two support sides 204, hereafter and in Figures I and II are used to respectively identify the right support side 204 and the left support side 204, of the forestry shredder 2.

According to the embodiment illustrated in the accompanying figures, each support side 204 is a box-shaped body with a housing 210, which is preferably arranged laterally to the shredding chamber 202.

According to an alternative embodiment (not illustrated), each support side 204 is defined by a single wall, i.e. is not a box-shaped body.

The main machine body 201 comprises a structure 206, which connects the support sides 204 to one another, delimits and covers, at the top, the shredding chamber 202. The structure 206 has a front edge 207 substantially parallel to the transverse axis Y1.

The forestry shredder 2 further comprises a door 208 which allows accessing the rotor 203. The door 208 is connected, in particular hinged, to the structure 206 in the area of the front edge 207. As illustrated in Figures 1-5, the front edge 207 is effectively arranged in the area of a side of the forestry shredder 2 which is opposite the side to which the radio-controlled vehicle 1 is connected in use. The door 208 is arranged crosswise, in particular perpendicularly, to the support sides 204. In other words, the door 208 substantially extends in a direction parallel to the transverse axis Y1 of the rotor 203.

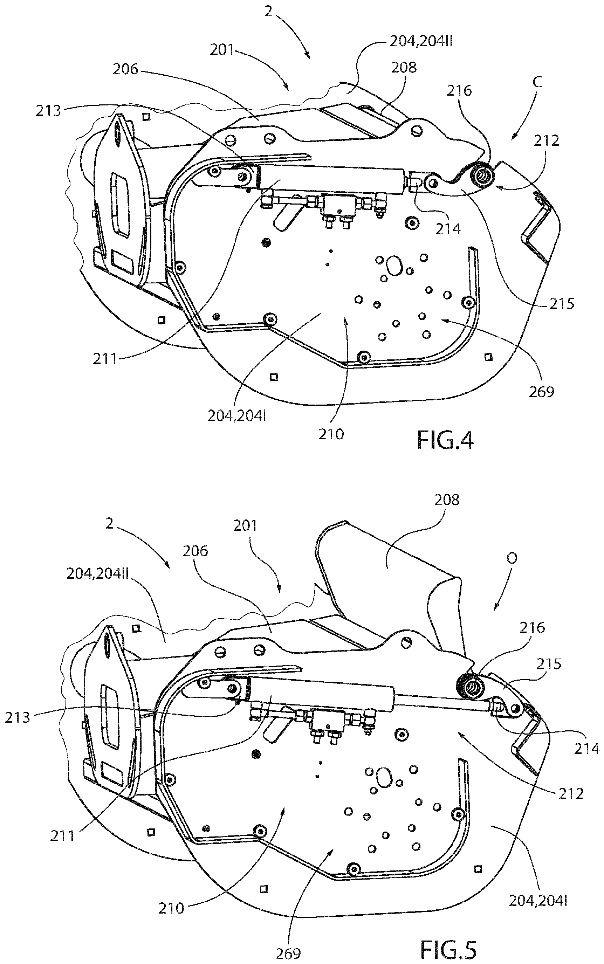

In other words, the front edge 207 is arranged in the area of the front portion of the forestry shredder 2. The door 208 is hinged to the structure 206 so as to be able to be selectively arranged in a closing position C (illustrated in Figure 4) or in an opening position O (illustrated in Figure 5) .

Specifically, in the closing position C the door 208 prevents the access to the rotor 203 from the outside, whereas in the opening position O the door 208 is raised, allowing the access to the rotor 203 and exposing it to the outside through a window.

The forestry shredder 2 further comprises an opening system 209 for the door 208 which moves it from the closing position C to the opening position O, and vice versa.

Advantageously, the opening system 209 is lateral, i.e. is configured to interact with a respective longitudinal end of the door 208. In other words, the opening system 209 is not arranged in the middle (or in a substantially central position) of the door 208 (along the transverse axis Y1).

According to what illustrated in Figures from 3 to 5, wherein some parts have been removed for the sake of clarity, the opening system 209 is installed in the area of a support side 204, in particular of the support side 2041.

In particular, the opening system 209 is installed inside the main machine body 201. The support side 204, therefore, protects the opening system 209.

In other words, the opening system 209 is connected to the main machine body 201 in the area of at least one of the support sides 204.

Preferably, the opening system 209 is connected to the main machine body 201 in the area of one single support side 204.

Advantageously, as illustrated in Figures from 3 to 5, if the support side 204 is a box-shaped body and is thus provided with the housing 210, then the opening system 209 is arranged therein. In other words, if the main machine body 201 is provided with the housing 210 which is arranged laterally to the shredding chamber 202, then the opening system 209 is arranged inside said housing 210.

According to a possible embodiment (not illustrated), the support side 204 is not a box-shaped body and the opening system 209 is arranged inside the main machine body 201, in particular inside the shredding chamber 202.

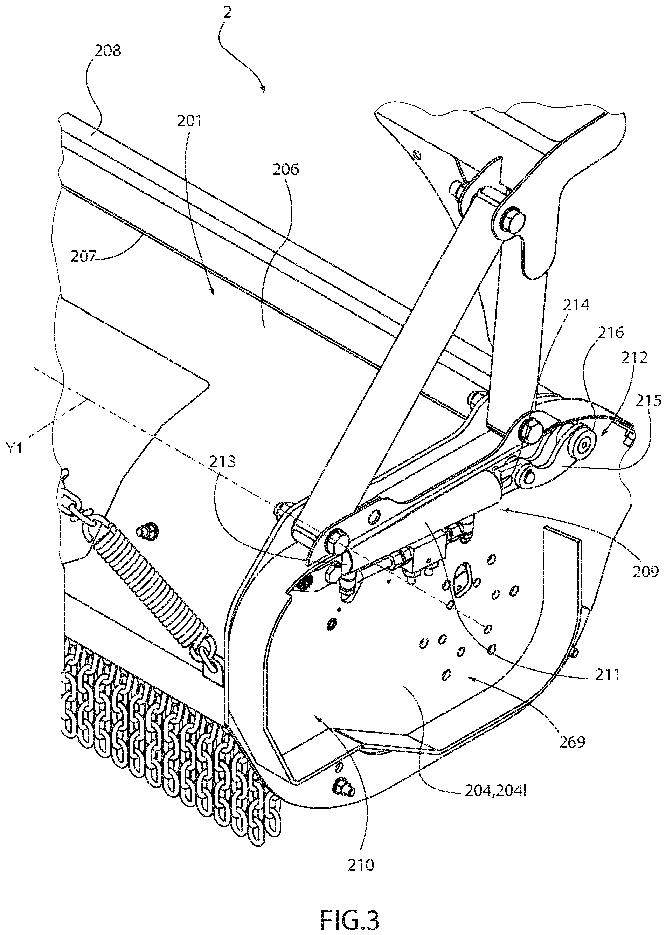

As illustrated in Figures 3-5, the opening system 209 comprises an operating means 211 and motion transmission means 212. The operating means 211 comprises an end 213, which is connected to the main machine body 201 and another end 214, which is opposite the end 213, which is instead connected to the motion transmission means 212.

Advantageously, the operating means 211 is a linear actuator such as, for example, a linear motor, and/or a hydraulic cylinder and/or a pneumatic cylinder.

Advantageously, the motion transmission means 212 comprise a rocker arm 215 and a pin 216 around which the door 208 rotates. The rocker arm 215 is interposed between the operating means 211 (in particular, it is connected to its end 214) and the pin 216. The pin 216 is substantially parallel to the axis Y1 of the rotor 203 and defines the hinge around which the door 208 rotates. The rocker arm 215 and the pin 216 are connected to one another, so as to rotate in an integral manner.

The rocker arm 215 is configured to oscillate between a first angular position (illustrated in Figure 4), in which the operating means 211 is in a retracted position and the door 208 is in the closing position C, and a second angular position (illustrated in Figure 5), in which the operating means 211 is in an extended position and the door 208 is in the opening position O, and vice versa. The oscillation of the rocker arm 215 is comprised between 0 and 220°, in particular between 0 and 180°. In other words, between the first angular position and the second angular position, the rocker arm 215 executes a rotation that is less than 220°, in particular is equal to 180°.

As illustrated in Figures from 6 to 8, the main machine body 201 further comprises a connection plate 220, which is configured, in use, to connect the forestry shredder 2 to a front coupling 4 of a radio-controlled vehicle 1. The connection plate 220 is provided with one or more slots 224 and a reference axis Z1.

The reference axis Z1 is parallel to the vertical axis Z, is coplanar to the connection plate 220 and is transverse, in use, to the supporting plane π1 of the ground.

The forestry shredder 2 further comprises a connection unit 221, which is interposed between the connection plate 220 and the front coupling 4. The connection unit 221 comprises a connection flange 222 which is provided with through openings 231 which in particular are holes. The connection flange 222 is configured to be respectively connected to both the connection plate 220 and the front coupling 4 by means of connection means 223 which engage the respective through opening 231 of the connection flange 222 and allow the relative inclination (i.e. a different inclination) between the connection flange 222 with respect to the connection plate 220.

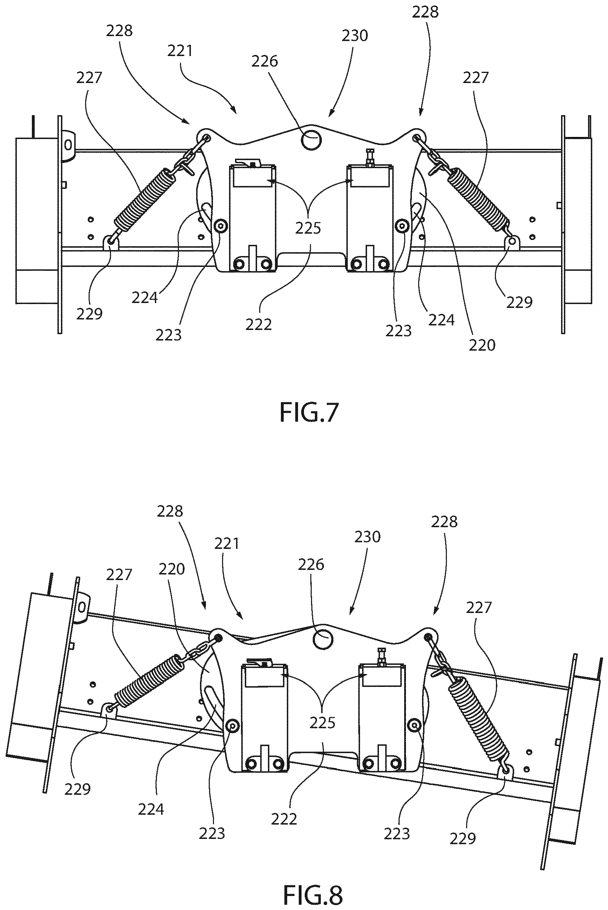

In addition, each connection means 223 is configured also to engage, i.e. slide in, the respective slot 224 of the connection plate 220 and thus to allow a relative inclination between the forestry shredder 2 and the radio-controlled vehicle 1. In other words, each connection means 223 engages the respective through opening 231 and the slot 224 for connecting the connection flange 222 to the connection plate 220 and thus allow the inclination of the forestry shredder 2 between an inclined position (illustrated in Figure 8) with respect to the radio-controlled vehicle 1 and an aligned position, i.e. substantially with the same inclination as the radio-controlled vehicle 1 (illustrated in Figure 7). It is noted that the relative inclination between the connection plate 220 and the connection flange 222 thus allows adapting the orientation of the forestry shredder 2 to the slope below, in particular to the supporting plane π1.

The connection means 223 connect the connection plate 220 to the connection flange 222; whereas, they do not connect the connection flange 222 to the front coupling 4.

Advantageously, the connection flange 222 is connected to the front coupling 4 by means of clamps 225; whereas, the connection means 223 that connect the connection plate 220 and the connection flange 222 are releasable connection means that comprise bolts.

Advantageously, the connection plate 220 and the connection flange 222 are hinged to one another by means of a pin 226, which is provided with a central axis X1 and which is arranged centrally in the area of an upper end 230 of the connection plate 220, the pin 226 acts as a centre of rotation of the connection flange 222 with respect to the connection plate 220.

According to what illustrated in Figures from 6 to 8, the connection plate 220 is provided with two slots 224 which are made on opposite sides of the axis Z1 of the connection plate 220. In particular, the reference axis Z1 is an axis of symmetry of the connection plate 220 and is incident with the central axis X1 of the pin 226. Therefore, the slots 224 are identical and specular to one another.

Advantageously, each slot 224 is curved, in particular convex, towards the inside of the connection plate 220. In other words, each slot 224 comprises an arc of a circle having the centre in the area of the pin 226, i.e. of the central axis X1.

The connection unit 221 further comprises spring-back means 227 which connect a respective upper peripheral end 228 of the connection plate 220 with the main machine body 201. In particular, each spring-back means 227 is connected at one of its ends to the main machine body 201 in the area of a respective coupling 229 which is arranged in a lower position in proximity of the support side 204 and at its opposite end in the area of an upper peripheral end 228 of the connection flange 222.

Advantageously, the spring-back means 227 are compression springs which are configured to bring the forestry shredder 2 from the inclined position (illustrated in Figure 8) back to the aligned position (illustrated in Figure 7).

It is highlighted that the connection unit 221 of the forestry shredder 2 according to the present invention is devoid of a connecting axle shaft. In other words, the forestry shredder 2 is not connected to the radio-controlled vehicle 1 by means of an axle shaft.

As described in the foregoing, the forestry shredder 2 is further provided with a drive assembly 240 (schematically illustrated in Figure 9 and with some details removed for the sake of clarity), which drives the rotor 203 into rotation. The drive assembly 240, illustrated in Figures from 9 to 11, comprises a drive (not illustrated), a drive belt 241 which transmits the motion from the drive to the rotor 203, a drive pulley 242 and a driven pulley 243. In particular, the drive belt 241 is respectively fitted on the drive pulley 242 and a driven pulley 243 which are properly spaced apart from one another.

In particular, the drive belt 241 transfers the motion from the drive pulley 242 driven into rotation by the drive to the driven pulley 243 which drives into rotation a shaft 262 and thus the rotor 203. The drive assembly 240 is provided with a tensioning assembly 244 of the drive belt 241 in order to ensure the correct tensioning of the drive belt 241 and, thus, the correct transmission of the motion.

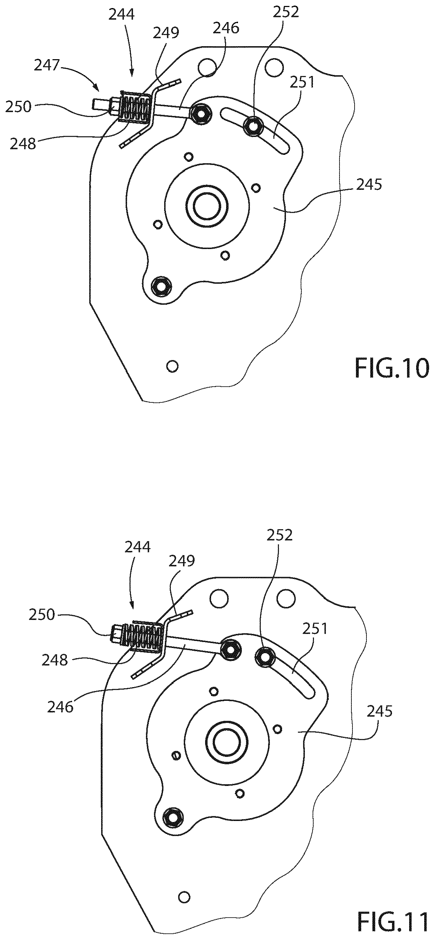

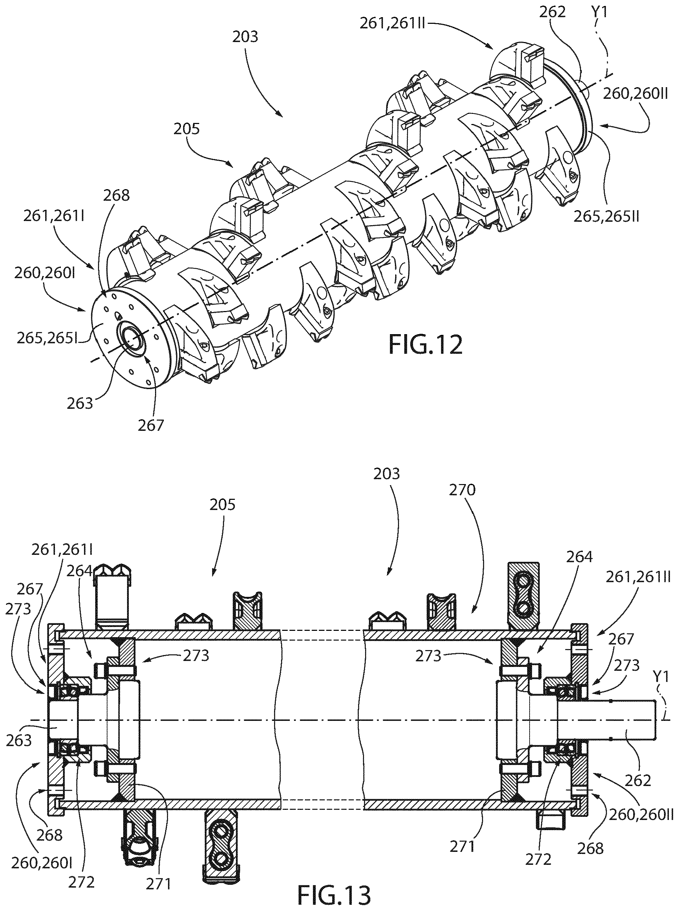

The drive assembly 240 is provided with an adjustment flange 245, which is arranged in the area of one of the pulleys 242 and 243, in particular of the drive pulley 242. The adjustment flange 245 is connected to the pulley 242 or 243, in particular to the drive pulley 242 of the drive belt 241, in order to adjust the tension of the drive belt 241 through the rotation of the adjustment flange 245. The adjustment flange 245 is provided with a slot 251 (illustrated in Figures 11 and 12), in which a connection means 252 slides. In other words, the slot 251 is configured to allow a rotation of the adjustment flange 245 by an angle comprised between 0 and 45°, in particular between 0 and 35°. The tensioning assembly 244 is thus configured to perform a fine adjustment of the rotation of the adjustment flange 245, i.e. an adjustment by an angle less than 10°, in particular at 5°.

The tensioning assembly 244 further comprises a tie rod 246 provided with a threaded end 247 and a spring 248, in particular a compression spring, preferably a coil spring, fitted around the tie rod 246. The spring 248 is arranged in particular between a stop 249 (which in particular is fixed) and a nut 250, which is screwed onto the threaded end 247 of the tie rod 246 in order to vary the preload of the spring 248. In other words, by screwing the nut 250 it is possible to compress the spring 248 more (i.e. reduce its length) and thus vary its preload. By varying the preload of the spring 248 it is possible to perform an adjustment of the orientation of the adjustment flange 245 and thus adjust the tension of the drive belt 241. The preload of the spring 248 and consequently the tension of the drive belt 241 vary according to the level, i.e. degree, of screwing of the nut 250 on the threaded end 247. In particular, the tensioning of the drive belt 241 is directly proportional to the preload of the spring 248. Advantageously, by increasing the preload of the spring 248 also the tensioning of the drive belt 241 increases.

As illustrated in the accompanying figures, the tensioning assembly 244 protrudes at least partially (preferably completely) from the main machine body 201. In other words, the tensioning assembly 244 is arranged at least partially (preferably completely) outside the main machine body 201. In particular, at least one portion of the tie rod 246 and of the nut 250 protrude outwards from the main machine body 201. In other words, at least one portion of the tie rod 246 and of the nut 250 is arranged outside the main machine body 201.

In particular, as illustrated in the accompanying figures, the tensioning assembly 244 is arranged on an outer surface of a side 204, i.e. the tensioning assembly 244, and is connected to the outside of the main machine body 201 in the area of one of the support sides 204.

Alternatively, if the support side 204 is made as a box-shaped body and has the housing 210, then the tensioning assembly 244 can be arranged at least partially inside the housing 210, so as to have at least one portion protruding outward from the housing 210.

According to what illustrated in Figures 12 and 13, the forestry shredder 2 comprises two connection assemblies 260 (in particular, 2601 and 26011), which respectively connect an end 2611 or 261II of the rotor 203 to the shaft 262 or to a shaft 263. In particular, the connection assembly 2601 connects the end 2611 of the rotor 203 to the shaft 263; whereas, the connection assembly 260II connects the end 261II (which is opposite the end 2611) of the rotor 203 to the shaft 262. The two shafts 262 and 263 are made as shafts separate from one another and are coaxial to the transverse axis Y1.

Each connection assembly 260 comprises releasable connection means 264 and a closing flange 265.

The connection means 264 connect the rotor 203 (i.e. its ends 261) to the shaft 262 or 263. In particular, the connection means 264 engage through openings 273 which are made in the area of a shoulder of the shaft 262 or 263.

Each closing flange 265 is provided with a through opening 267 which houses the respective shaft 262 or 263. In particular, as illustrated in Figures 12 and 13, the shaft 262 protrudes from the closing flange 265II, in order to be connected to the drive assembly 240 (in particular the driven pulley 243) which drives the rotor 203 into rotation, as described in the foregoing. Whereas, the shaft 263 does not protrude from the closing flange 2651.

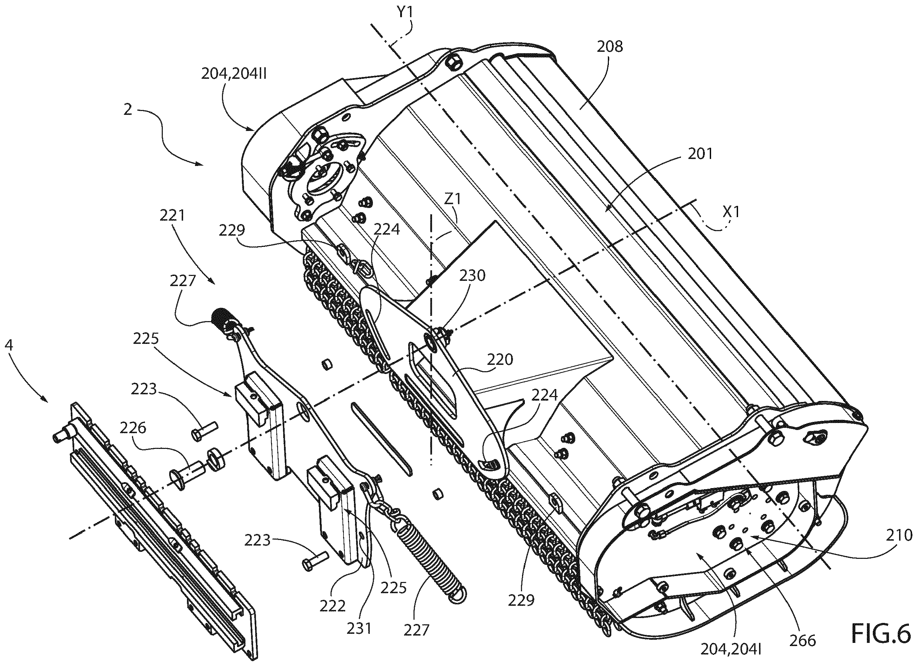

Each closing flange 265 closes the respective end 261 of the rotor 203 and is connected to the respective support side 204 by means of connection means 266 (illustrated in Figures 6 and 9) which engage the through openings 268 and 269. The through openings 268 are obtained in the area of the closing flange (Figures 12 and 13); whereas, the through openings 269 are obtained in the area of the support sides 204 (Figures 3-5).

Therefore, in use when the rotor 203 rotates, the closing flange 265 does not rotate and is integral with the support side 204.

The term "releasable connection means 264 or 266" has the meaning of connection means that allow connecting two elements in a removable manner, such as, for example, bolts. The term "releasable connection means 264 or 266" does not have the meaning of permanent connection means such as, for example, welds.

Advantageously, as can be seen from the section illustrated in Figure 13, the rotor 203 has a cylindrical body 270 on whose outer surface the work tools 205 are arranged and has reaction elements 271 arranged inside the cylindrical body 270 and which are connected thereto. In particular, the two elements 271 are arranged spaced apart from the respective ends 261 of the rotor 203. Each shaft 262 or 263 (in particular its shoulder provided with through openings 273) is arranged at least partially in abutment against the reaction element 271 and is connected to the same by the connection means 264. In other words, at least one portion of the shaft 262 or 263 is arranged in abutment against the respective reaction element 271 and is connected to said reaction element 271 by means of the connection means 264.

Advantageously, the reaction element 271 is connected to the inner surface of the cylindrical body 270, in particular by welding.

Each connection assembly 260 comprises a bearing 272 arranged between the respective shaft 262, 263 and the respective closing flange 265. In particular, the bearing abuts on one side against a shoulder of the shaft 262 or 263 and on the other side it is locked by locking means 273 which can comprise, for example, a Seeger ring and a ring nut.

According to a possible alternative (not illustrated), the bearing 272 is replaced by a bushing.

Advantageously, the present invention also concerns the radio-controlled vehicle 1 comprising a forestry shredder 2 as described up to here.

The forestry shredder 2 described up to here has a plurality of advantages.

Firstly, by making the opening system 209 in accordance with the present invention, a precise and reliable opening of the door 208 is made possible.

Moreover, by arranging the opening system 209 inside the shredding chamber 202 or inside the support side 204, it is protected from potential external impacts, therefore the opening system 209 is less exposed to damage and to being dirtied during the working phases.

Moreover, by arranging the opening system 209 laterally, the main machine body 201 is made of a smooth and intact component that prevents dirt or small pieces of mowing, which typically settle on the main machine body 201, from unintentionally locking the opening system 209.

A further advantage of the forestry shredder 2 object of the present invention is the presence of a connection unit 221, devoid of axle shafts, which allows improving the connection of the radio-controlled vehicle 1 to the forestry shredder 2 and makes it more reliable. In fact, as the connection unit 221 is devoid of the axle shaft, the risk that the axle shaft could break and potentially fall down the slope of the forestry shredder 2 is averted.

The connection unit 221 according to the present invention is made of elements that are connected to one another by releasable connection means. Therefore, in the event of a breakdown, a quicker and easier replacement of the component can be performed. Moreover, as the connection unit 221 is connected to the connection plate 220 by means of the connection means 223 which are symmetrically spaced apart from the axis Z1, a better distribution of the forces and of the torques acting on said forestry shredder 2 is achieved.

The forestry shredder 2 provided with the tensioning assembly 244 manufactured in accordance with the present invention, which thus protrudes at least partially outward from the main machine body 201, immediately allows knowing, without requiring any disassembling of components of the forestry shredder 2, whether the drive belt 241 has an unsuitable tensioning. In fact, as the tensioning of the drive belt 241 is proportional to the preload of the spring 248, it is possible to check whether it is necessary to increase or reduce the tension of the drive belt 241 as a function of the compression of the spring 248 and thus of the degree of screwing of the nut 250 (easily detectable by the operator). Checking the correct tensioning of the drive belt 241 is of fundamental importance since, if it is tensioned less than necessary, the drive belt 241 slides on the pulleys 242 and 243 and is thus unable to be properly dragged; whereas, if the drive belt 241 is tensioned more than necessary, it will tend to break due to the tractive forces to which it is subjected. Moreover, as the spring 248 has a fixed stop 249 (i.e. its position does not vary over time), the preload of the spring 248 is generated by the simple rotation of the nut 250. Therefore, it is clear that the tensioning assembly 244 allows an easy adjustment of the tensioning of the drive belt 241.

The forestry shredder 2 provided with the connection assembly 260 facilitates routine and extraordinary maintenance, it being easy to access inside the rotor 203. In fact, the rotor 203 can be completely disassembled from the forestry shredder and also in its single components. In particular, as the rotor 203 is connected to the shaft 262 or 263 in a releasable manner, in the event of a breakdown or breakage of, for example, the shaft 262 or 263, an easy removal and replacement of said shaft 262 or 263 is ensured. In this manner it is thus possible to replace the single component and not the entire rotor 203 with both shafts 262 and 263. It is thus evident that this also allows reducing costs.

## Claims

1. An improved forestry shredder (2) comprising:
a main machine body (201), which delimits a shredding chamber (202) and is provided with two support sides (204, 2041, 204II), which laterally delimit the shredding chamber (202); and
a rotor (203), which is arranged inside the shredding chamber (202), is rotatable around a transverse axis (Y1) arranged crosswise to the support sides (204, 2041, 204II) and is provided with work tools (205), which are configured to cut plant material during the rotation of the rotor (203); the rotor (203) is connected, in the area of two ends (261, 2611, 261II) of its, to a respective shaft (262, 263) by means of a connection assembly (260, 2601, 26011), which comprises first releasable connection means (264);
each connection assembly (260, 2601, 260II) comprises a closing flange (265, 2651, 265II), which closes the respective end (261, 2611, 261II) of the rotor (203) and is connected to the respective support side (204, 2041, 204II) by means of second connection means (266) of the releasable type; each closing flange (265, 2651, 265II) is provided with a through opening (267), which houses the respective shaft (262, 263);
and each connection assembly (260) comprises a bearing (272) or a bushing arranged between the respective shaft (262, 263) and the respective closing flange (265).

2. The forestry shredder (2) according to claim 1, wherein the first and second releasable connection means (264, 266) comprise bolts.

3. The forestry shredder (2) according to claim 1 or 2, wherein the rotor (203) has a first end (261I), which is connected to a first shaft (263), and a second end (261II), which is opposite relative to the first end (261I) and is connected to a second shaft (262); wherein the second shaft (262) projects from the closing flange (265II) so as to be connected to an operating assembly (240) causing the rotation of the rotor (203).

4. The forestry shredder (2) according to claim 3, wherein the first shaft (263) does not project from the closing flange (2651).

5. The forestry shredder (2) according to any one of the claims from 1 to 4, wherein the rotor (203) has a cylindrical body (270), on which the work tools (205) are arranged, and striker elements (271), which are arranged inside the cylindrical body (270) and are connected to it; wherein each shaft (262, 263) at least partially strikes against the respective striker element (271) and is connected to said striker element (271) by means of first connection means (264).

6. The forestry shredder (2) according to claim 5, wherein the striker element (271) is connected to the cylindrical body (270), in particular through welding.

7. A radio-controlled vehicle (1) comprising a forestry shredder (2) according to any one of the claims from 1 to 6.

## Patentansprüche

1. Verbesserter Forsthäcksler (2) umfassend:
einen Maschinenhauptkörper (201), der eine Zerkleinerungskammer (202) begrenzt und mit zwei Trägerseiten (204, 2041, 204II) versehen ist, die die Zerkleinerungskammer (202) seitlich begrenzen; und
einen Rotor (203), der innerhalb der Zerkleinerungskammer (202) angeordnet ist, der um eine quer zu den Trägerseiten (204, 2041, 20411) angeordnete Querachse (Y1) drehbar ist und mit Arbeitswerkzeugen (205) versehen ist, die dazu ausgebildet sind, während der Drehung des Rotors (203) Pflanzenmaterial zu schneiden; wobei der Rotor (203) im Bereich seiner beiden Enden (261, 2611, 26 111) mit einer jeweiligen Welle (262, 263) mittels einer Verbindungsanordnung (260, 2601, 26011) verbunden ist, die erste lösbare Verbindungsmittel (264) umfasst,
wobei jede Verbindungsanordnung (260, 2601, 26011) einen Verschlussflansch (265, 2651, 26511) umfasst, der das jeweilige Ende (261, 2611, 26 111) des Rotors (203) verschließt und mit der jeweiligen Trägerseite (204, 2041, 20411) mittels zweiter Verbindungsmittel (266) vom lösbaren Typ verbunden ist, wobei jeder Verschlussflansch (265, 2651, 265II) mit einer Durchgangsöffnung (267) versehen ist, die die jeweilige Welle (262, 263) aufnimmt; und wobei jede Verbindungsanordnung (260) ein Lager (272) oder eine Buchse umfasst, die zwischen der jeweiligen Welle (262, 263) und dem jeweiligen Verschlussflansch (265) angeordnet ist.

2. Forsthäcksler (2) nach Anspruch 1, wobei die ersten und zweiten lösbaren Verbindungsmittel (264, 266) Bolzen umfassen.

3. Forsthäcksler (2) nach Anspruch 1 oder 2, wobei der Rotor (203) ein erstes Ende (2611), das mit einer ersten Welle (263) verbunden ist, und ein zweites Ende (26111) aufweist, das dem ersten Ende (2611) gegenüberliegt und mit einer zweiten Welle (262) verbunden ist; wobei die zweite Welle (262) aus dem Verschlussflansch (26511) herausragt, um mit einer Betätigungsanordnung (240) verbunden zu werden, die die Drehung des Rotors (203) bewirkt.

4. Forsthäcksler (2) nach Anspruch 3, wobei die erste Welle (263) nicht aus dem Verschlussflansch (2651) herausragt.

5. Forsthäcksler (2) nach einem der Ansprüche 1 bis 4, wobei der Rotor (203) einen zylindrischen Körper (270), an dem die Arbeitswerkzeuge (205) angeordnet sind, und Schlagelemente (271) aufweist, die innerhalb des zylindrischen Körpers (270) angeordnet und mit diesem verbunden sind, wobei jede Welle (262, 263) zumindest teilweise an dem jeweiligen Schlagelement (271) anschlägt und mit diesem mittels erster Verbindungsmittel (264) verbunden ist.

6. Forsthäcksler (2) nach Anspruch 5, wobei das Schlagelement (271) mit dem zylindrischen Körper (270) verbunden ist, insbesondere durch Schweißen.

7. Funkgesteuertes Fahrzeug (1) mit einem Forsthäcksler (2) nach einem der Ansprüche 1 bis 6.

## Revendications

1. Broyeur forestier amélioré (2) comprenant:
un corps de machine principal (201), qui délimite une chambre de broyage (202) et est pourvu de deux côtés de support (204, 2041, 204II), qui délimitent latéralement la chambre de broyage (202); et
un rotor (203), qui est disposé à l'intérieur de la chambre de broyage (202), est rotatif autour d'un axe transversal (Y1) disposé transversalement aux côtés de support (204, 2041, 204II) et est pourvu d'outils de travail (205), qui sont configurés pour couper la matière végétale pendant la rotation du rotor (203); le rotor (203) est relié, dans la zone de deux extrémités (261, 2611, 261II) de celui-ci, à un arbre (262, 263) respectif au moyen d'un ensemble de liaison (260, 2601, 260II), qui comprend des premiers moyens de liaison amovibles (264);
chaque ensemble de liaison (260, 2601, 260II) comprend une bride de fermeture (265, 2651, 265II), qui ferme l'extrémité (261, 2611, 261II) respective du rotor (203) et est reliée au côté de support (204, 2041, 204II) respectif au moyen de deuxièmes moyens de liaison (266) de type amovible; chaque bride de fermeture (265, 2651, 265II) est pourvue d'une ouverture traversante (267), qui loge l'arbre (262, 263) respectif; et
chaque ensemble de liaison (260) comprend un palier (272) ou une douille disposé entre l'arbre (262, 263) respectif et la bride de fermeture (265) respective.

2. Broyeur forestier (2) selon la revendication 1, dans lequel les premier et deuxième moyens de liaison amovibles (264, 266) comprennent des boulons.

3. Broyeur forestier (2) selon la revendication 1 ou 2, dans lequel le rotor (203) a une première extrémité (2611), qui est reliée à un premier arbre (263), et une deuxième extrémité (261II), qui est opposée par rapport à la première extrémité (2611) et est reliée à un deuxième arbre (262); dans lequel le deuxième arbre (262) fait saillie de la bride de fermeture (265II) de manière à être relié à un ensemble de commande (240) provoquant la rotation du rotor (203).

4. Broyeur forestier (2) selon la revendication 3, dans lequel le premier arbre (263) ne fait pas saillie de la bride de fermeture (2651).

5. Broyeur forestier (2) selon l'une quelconque des revendications de 1 à 4, dans lequel le rotor (203) a un corps cylindrique (270), sur lequel sont disposés les outils de travail (205), et des éléments percuteurs (271), qui sont disposés à l'intérieur du corps cylindrique (270) et sont reliés à celui-ci; dans lequel chaque arbre (262, 263) percute au moins partiellement contre l'élément percuteur (271) respectif et est relié audit élément percuteur (271) au moyen de premiers moyens de liaison (264).

6. Broyeur forestier (2) selon la revendication 5, dans lequel l'élément percuteur (271) est relié au corps cylindrique (270), en particulier par soudage.

7. Véhicule radiocommandé (1) comprenant un broyeur forestier (2) selon l'une quelconque des revendications de 1 à 6.
